# EUROPEAN PATENT SPECIFICATION

(11) **EP 2 044 848 B1**
(45) Date of publication and mention of the grant of the patent: **16.12.2009**
(21) Application number: 07425606.6
(22) Date of filing: 01.10.2007
(51) Int. Cl.: A23L 1/211

(54) **Process for the treatment and the recovery of humid pomace produced by two-phase oil mills**
Verfahren zur Behandlung und Rückgewinnung von durch Zweiphasen-Ölmühlen erzeugtem feuchtem Trester
Procédé pour le traitement et la récupération de marc humide produit dans des moulins à huile à double phase

(43) Date of publication of application: 08.04.2009
(73) Proprietor: STC S.r.l. Science Technology & Consulting, 87064 Corigliano Calabro CS (IT)
(72) Inventor: La Sala, Giorgio, 87084 Corigliano Calabro (CS) (IT)

(56) References cited:
- WO-A-2006/058938
- US-A- 4 483 875
- US-A- 6 103 516

## Description

This invention regards a process for the treatment and the recovery of two-phases humid pomace and a process, which can eventually be integrated with the previous one, for the treatment and the recovery of the vegetable waste water, out-flowing from oil mills.

The oil industry produces circa 17÷20 kg of olive oil from 100 Kg olives treated. The remaining 80 kg of raw material are waste products, composed of a solid phase, the pomace, and a liquid phase, the vegetable water.

The pomace and the vegetable waste water present following problems for the oil industry:
- Storage problems because of difficult disposal and companies are forced to accumulate this sewage in situ for a long period;
- Their disposal presents significant industrial costs which impact on the resale price of olive oil;
- The volatile malodor organic substances evaporate creating atmospheric contamination because of the bad smell emitted.

The pomace is constituted of solid waste that derives from the production of olive oil and is composed of peel from the grounded stone (pit) and from the cellulose and ligneous parts of the drupe.

The pomace can contain a very variable quantity of water depending on the type of olive oil production that is used.

The olives, once crushed and transformed in paste, arrive at a horizontal axis centrifuge separator, the decanter. The decanter, in a traditional production process, separates by centrifugal force and due to their different specific weight, the three phases present in the paste: oil, water and pomace.

Water up to 50% in weight of the incoming paste is added to a decanter with three traditional exits, to allow a more complete separation of the oil from the paste. Since there are two exits for the liquid it is necessary to use two centrifuges to recuperate the maximum quantity of oil. The outflows are: pomace 55-57 Kg/100 Kg of olives, with a humidity of the pomace of 48-54%, oil, and vegetable water 80-100 kg/100 kg of olives.

A decanter with two exits performs the separation of the three phases of the paste through only two exits, humid pomace and oil must. The process foresees that no free water is present inside the machine (in that case oil and water would be mixed in the outflow) and allows to the reduction of the viscosity as much as possible to enhance the separation process of the oil through the extending mixing time and addition of water to the mixing machine in a quantity of 10% regarding the colloidal quantity present. Because of the low water content in the out-flowing oil in this type of decanter, the mix needs to be sent to only one vertical centrifuge that will separate the two phases and recover oil.

In the traditional two-phase process the added water is 0-10% while the outflows are pomace 75-80 kg/100 kg olives (with a humidity of 58-65% and with 10-14% of oil), oil (which contains between 5 to 15% water with solids in suspension) and with no production of vegetable water. In a three-phases production process there is a lower water quantity in the pomace (50% percent of the total weight) compared to a two-phases process, however there is a higher quantity of vegetable water to treat and/or to dispose.

On the other hand, pomace produced with the two-phases method has an higher water content, ca 65%, and extremely low quantity of vegetable water is produced.

The storage of the pomace brings significant problems to who wants to treat it in its own factory. The reasons are the following:
- The pomace produced, especially with the two-phases method is too humid to be treated for the extraction of the residual oil or burnt for the production of energy;
- There are problems for the transports to olive residues plant, because of the malodor substances contained in the pomace and for the high transport costs;
- The pomace produced with the two-phases system is very humid and therefore needs significant quantity of energy for the drying before following treatments;
- The pomace is an unstable waste material in continuous fermentation: it needs therefore to be stored the minimum time possible in the factory because of the high quantities of organic products that are liberated due to fermentation. These products cannot be released in the atmosphere because they are heavy pollutants; therefore the waste pipes need to be equipped with a water scrubber to eliminate most part of the vapors. This water cannot be dispersed directly in the environment because they are contaminated, thus a water depuration plant needs to be associated to the scrubber.

The olive oil residue remaining in the pomace is extracted in the olive residues plant. The humidity content of the pomace obtained from the oil mills varies from a minimum of 45% for the three phase processes to a maximum of 60÷70% for the two-phases processes, which will require a more substantial drying.

Residual oil is extracted from the dried product by a solvent and is than consequently distilled (rectification). After the rectification other processes are performed like the discoloration, the de-acidification and the deodorization obtaining pomace olive oil. The exhausted pomace can be used as fuel or as soil fertilizer in agriculture.

In previous processes, described above, it is necessary to use a high quantity of energy to evaporate the water contained in the humid pomace. In the plants where olives are processed to obtain olive oil as final product, there is also a production of vegetable water in higher or lower quantities according to the process used. The vegetable water represent the waste water deriving from the production of olive oil. Those are composed of the water contained in the drupe liberated during the olive crushing, washing and processing water. Therefore the higher quantity of vegetable water is obtained in the plants with three-phases production where between 40 to 60 kg of water for each 100 kg of introduced pasta are added to fluidize the paste of the crushed olives. This fluidification is necessary for a good separation of the oily phase from the humid pomace and from the vegetable water in the decanter. The disposal of these high volumes of waste byproducts represents a high cost for oil mills: strict laws have been issued for the protection of the environment which forbid the disposal of the waste coming from agro-industrial processes into water courses and urban sewer system. Vegetable waste water has a predominantly organic nature and, therefore, besides being considered high contaminant by the current legislation, they are difficult to purify, with the plants usually utilized to treat sewage due to the high dry residue present. These difficulties, together with a logic for the return of biomass to the soil, has induced several legislators of several oil producing countries in the Mediterranean area to allow the controlled and limited spreading of vegetable water on agricultural fields.

Usually the vegetable water produced in the oil industry is recuperated in big basins and is periodically sent by tank trucks to plants specialized in disposal, with high costs for the olive oil industry, or, where permitted, dispersed in the terrain.

There are several purification processes for vegetable water in the mill itself. All these processes present different issues that make their implementation economically not viable, with subsequent increase of the resale price of olive oil. Sometimes vegetable water are left to evaporate in huge basins with a subsequent reduction in the volume of the product to be disposed, but this requires a long permanence of the water in the basins.

The applicant has developed a process that allows achieving a high energy saving for the drying of the humid pomace thanks to the introduction of the primary dehumidification of the humid pomace inserting a decanter before the drying stage with the objective of obtaining a pomace with a reduced water content to be sent through the drying phase.

The ideated process developed for the treatment of the pomace can be integrated with a process for the treatment of the waste water recovered from the primary de-humidification of the humid pomace, through the combination of mechanical separation processes and membrane separation in order to reduce the contaminants deriving the process and recover the polyphenolic fraction present in the vegetable water and obtain purified water with BOD values low enough to be re-utilized it in the industrial processes or discharged in the sewage system. The process developed for the treatment of waste water can be applied on vegetable water deriving from whatever type of process of whichever type of olives.

The process, for the treatment and recovery of humid pomace deriving from two phase oil mills, in order to obtain dryer pomace, consists mainly of performing the dehumidification of the humid pomace and then the drying of the dehumidified pomace, where the dehumidification is performed in an apparatus that uses centrifugal force, preferably in a decanter, centrifuge with a horizontal axis with an extractive screw for solids, with a centrifugal force preferably ranging between 1500 <g< 3000.

The dehumidifcation can be made operating preferably at a temperature between 20 and 100°C until a dehumidified pomace with ideally between 40 and 55 % of residual humidity is obtained. The following drying of the de-humidified pomace is performed using preferably hot air at temperatures between 80 and 250 °C for a time period sufficient to obtain a dry pomace at a residual humidity not higher than 7%, and preferably between 6 and 7%.

The pomace thus dried can preferably be subjected to an extraction with an appropriate solvent, preferably chosen between hexane and similar solvents allowed by the local legislation, to recover the residual oil present.

A first object of the present invention consists of a process for the treatment and recovery of the water obtained from the dehumidifcation phase, but applicable also to vegetable water coming from traditional three phase mills, and to the olives wash water and/ or the water used to fluidify the paste, which includes the following phases:
■ physical pretreatments of the vegetable water to remove residual olive oil;
■ administration of additives and/or flocculants to the physically pretreated vegetable water, to facilitate the separation of the solid phase from the liquid one, and with subsequent sedimentation of the solid phase, preferably performed by a horizontal axis centrifuge in order to further separate residual water from the solid phase composed mainly of sludge;
■ separation and clarification by a centrifuge, preferably with vertical axis, of the liquid phase from solid coarse residues (sludge);
■ filtration of the liquid phase, preferably through a precoat, to remove the smallest solid particles;
■ ultrafiltration of the liquid phase through an adopted membrane separating molecules with higher molecular weight from the water, eventually recycled at the flocculation stage;
■ nanofiltration of the permeate, ultrafiltered water, separating through an adopted membrane a permeate composed mainly of extremely clarified water with a low BOD content from a concentrate containing mainly a concentrated solution of valuable chemical substances;
■ biological oxidation with active sludge of the nanofiltered water and subsequent separation from the sludge obtaining purified water.

The physical pretreatment of vegetable water preferably comprises separation of the water through sedimentation, preferably realized in a flottation basin, separating the major part of water from the heavy phase including the olive oil residues. This heavy phase then undergoes further separation, preferably realized in a horizontal axis centrifuge, separating olive oil to be rectified from water still present.

The molecules at higher specific weight separated at the ultrafiltration stage can be recycled at the flocculation stage.

The flocculant added to the aqueous phase is preferably at polyacrylamide base, whereas the added quantity of this flocculant is preferably between 20 1000 ppm, rather between 30 and 50 ppm.

To precipitate the sludge PAC (polyaluminum chloride) is also added. Preferably 0.05 1 to 0.25 kg of PAC is added to each 100 liters of treated vegetable water.

In each stage of the process the water temperature is preferably room temperature except in the ultrafiltration phase where it can be heated up to 50-60°C.

Through nanofiltration valuable chemical substances (especially polyphenols) contained in the vegetable water are extracted in a concentrated form, and can therefore become primary material for chemical industries that are interested in the extraction of natural chemical substances of economical relevance from agricultural process waste. Further object for the current invention consists in an integrated proceeding in which in addition to the solid waste (pomace) recover process (above described) the vegetable water purification process (according to the first invention object) can be added, obtaining a very flexible integrated proceeding with the objective of making the vegetable water completely re-usable or make them suitable for the discharge in collection bodies in line with European directives on the contamination of water resources.

The integrated process for the treatment and the recover of the humid pomace leaving the two phase oil mill includes essentially the dehumidification of the humid pomace, operating preferably at temperatures between 20 and 100 °C until obtaining a dehumidfied pomace with a residual humidity between 40 and 55%, and then the drying of the dehumidified pomace, operating preferably at temperatures between 80 and 250 °C until obtaining a dried pomace with a residual humidity inferior of 7%, rather between 6-7%, since the dehumidification is realized in axis apparatus that works with the centrifugal force, preferably a horizontal axis centrifuge (decanter) with an extractive screw for solids, operating with centrifugal force preferably between 1500 <g< 3000. Furthermore, in some cases, the integrated process includes also an extraction of the dried pomace with a suitable solvent, preferably chosen between hexane and other appropriate solvents allowed by the local current legislation, to recover present residual oil. Subsequently the vegetable water obtained during the mechanical separation of dehumidification of the humid pomace have to be subjected to following stages:
■ Physical pretreatments of the vegetable water to remove residual olive oil;
■ Administration of additives and/or flocculants to the physically pretreated vegetable water, to facilitate the separation of the solid phase from the liquid one, and with subsequent sedimentation of the solid phase, preferably performed by a horizontal axis centrifuge, in order to further separate residual water from the solid phase composed mainly of sludge;
■ Separation and clarification by a centrifuge, preferably with a vertical axis, of the liquid phase from solid coarse residues (sludge);
■ Filtration of the liquid phase, preferably through a precoat, to remove the smallest solid particles;
■ Ultrafiltration of the liquid phase through an adopted membrane separating molecules with higher molecular weight from the water, eventually recycled at the flocculation stage;
■ Nanofiltration of the permeate, ultrafiltered water, separating through an adopted membrane a permeate composed mainly of extremely clarified water with a low BOD content from a concentrate containing mainly concentrated solution of valuable chemical substances;
■ Biological oxidation with active sludge of the nanofiltered water and subsequent separation from the sludge obtaining purified water.

As far as further details concerned for physical treatments, flocculants, additives and the water temperature, the same considerations made above for the process in accordance to the second object of the invention, are valid.

The sludge separated at the sedimentation stage, the sludge separated at the clarification stage with a vertical centrifuge and the sludge separated in the biological oxidation stage can also be subject to drying, after being mixed with dehumidified pomace.

To the vegetable water deriving from the dehumidification of the humid pomace to be purified through the integrated process (in accordance with the invention), can also be added the olive washing water and/or the water used to fluidify the pastes and/or the water used to wash the used machines. With the integrated process described above the vegetable water accumulation will be significantly reduced and the oil factories will be able to purify the produced vegetable water on their own. It will also reduce the industrial waste to only the solid component separated from water (sludge) and obtaining also water of an excellent quality that can be re-used for different functions in the factory, with levels of residual chemical substances below emission limits prescribed by the European directives. This procedure can be applied also in cooperative plants where several mills confer the humid pomace or the vegetable water.

We now describe a realization in accordance with the invention that should not be considered as a limitation of the capacity of the invention itself.

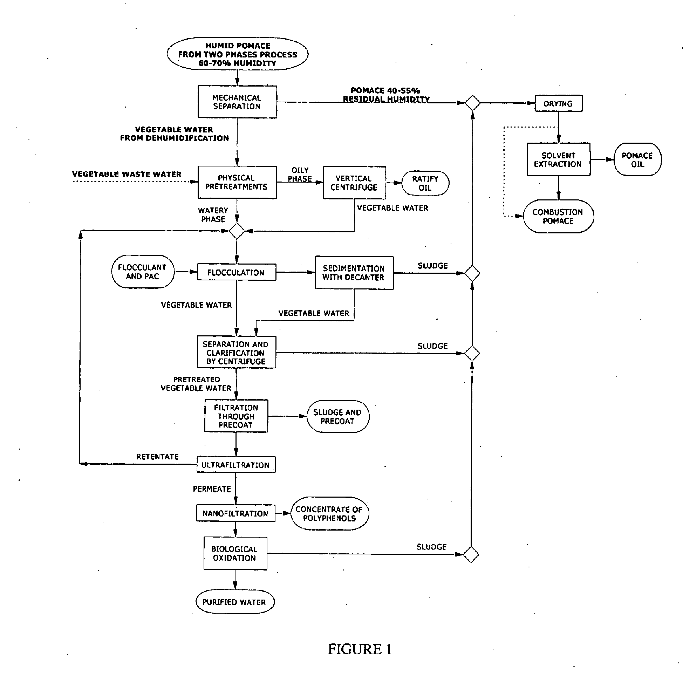

The fig. 1 describes the process relative to the treatment of the humid pomace coming from oil mill integrated with a process for the treatment of the water recovered during the dehumidification and eventually mixed with vegetable water exiting from other parts of the oil mill.

The humid pomace is dehumidified by a horizontal axis centrifuge with an extractive screw for solids, working preferably with a centrifugal force between 1500<g<3000, then the dehumidified pomace is dried, with hot air or electromagnetic fields, and is subjected to extraction with a solvent, hexane or other appropriate solvents allowed by the local current legislation, to recover on one hand pomace oil and on the other a pomace ready to be used as fuel.

Eventually the dried pomace can be directly used as fuel.

The vegetable water obtained through the mechanical separation from the dehumidification of the humid pomace still contains olive oil residues: these residues are removed from the major part of the water through sedimentation realized in a flottation basin. The heavy phase is introduced in a vertical axis centrifuge where the olive oil to be rectified is separated. The water separated by the centrifuge is added to the water flow sent to the flottation phase. To the liquid phase obtained in this way additives and/or flocculants (flocculation) are added, to facilitate the separation of the solid phase from the liquid one, followed by a sedimentation of the solid phase, preferably realized with a horizontal axis centrifuge, to finally separate further residual water from the solid phase composed mainly of sludge. The flocculant is at polyacrylamide base with a concentration of ca 40 ppm and PAC - circa 0.1%.

Thereafter the liquid phase is introduced in a vertical centrifuge (clarification) with a centrifugal force between 3000<g<10000, and is separated from solid coarse residues (sludge).

Subsequently the liquid phase obtained is filtered in an suitable equipment, possibly using precoat filters, to remove the smallest solid particles.

The water is then treated by an unit of ultrafiltration membranes in which the molecules with higher molecular weight are separated from the water. The ritentate is recycled in the flocculation unit. The permeate is sent to a unit with membranes for nanofiltration. The concentrate coming from this unit consists of a concentrated solution of valuable chemical substances (polyphenols) while the permeate is made of extremely clarified water with a low BOD content, but not yet low enough to respect the law limits.

This water is then treated in a plant for biological oxidation with active sludge, through which the last residues of organic substance are removed and concentrated in the sludge.

The purified water obtained with this process presents characteristics of such quality that it can be re-utilized in the plant itself, or it can be discharged in the environment as it respects the limits of the law set by the European directives. Furthermore the chemical substances extracted in the filtration phase with membranes are valuable (polyphenols) and can be utilized by the fine chemical or pharmaceutical industries.

The sludge gathered in the flottation phase, in the clarification and in the biological treatment can be directed in a single flow and sent to the pomace drying unit after having been mixed with dehumified pomace.

The water treatment process can be applied as such in the treatment of vegetable water produced by any type of oil mill

We now provide two examples, one regarding a process for the treatment and the recovery of pomace and the other regarding the process for the treatment and recovery of vegetable water.

### Example 1

### Treatment and recovery of pomace.

A flow of 1000 kg/h of humid pomace with 60% humidity is treated with mechanical separation in a horizontal decanter, and from this is generated a flow of 770 kg/h of pomace with a humidity of 48% and a flow of eliminated waste water of about 230 kg/h.

The flow of the pomace with 48% of humidity is dried by hot air of 150°C receiving in this way a flow of dehumidified pomace of 445 Kg/h in which almost 90% of the residual water is removed. The air used is heated to 150°C utilizing the combustion heat of the exhausted pomace. To remove 90% of the water in the dehumidified pomace almost 60 Kg/h of exhausted pomace must be burnt. The flow of this dehumidified pomace is sent to the extraction treatment using hexane as solvent in relation 1:1 with the pomace to recover the oil residue. In this way almost 20 Kg/h of pomace oil is recovered. The remaining 425 Kg/h of recovered exhausted pomace can be used as combustion material.

### Example 2

### Treatment and recovery of olive oil waste water

A flow of 10 m³/h of vegetable water is first subjected to physical pretreatments (sedimentation in a flottation basin and separation in a horizontal axis centrifuge) to separate the residual oily phase. From the aqueous flow is separate an oily flow of 1 m³/h from which a flow of 0,025 m³/h of oil (to be rectified) is recovered, through centrifugation with a vertical centrifuge operating at 4500g.The flow of ca 1 m³/h of purified (from the oily phase) vegetable water is sent together with a flow of 0,15 m³/h composed by 30% of PAC and 70% of PAA, to a flottation basin to eliminate the sludge. The recovered water is then centrifuged with a vertical centrifuge operating at 4000g and then filtered on precoat: this purified water is further sent for membrane treatments after which a flow of 0,75 m³/h of polyphenols is obtained. The aqueous flow is instead subjected to a biological treatment from which a flow of 7,5 m³/h of purified water is obtained.

## Claims

1. Process for the treatment and the recover of the vegetable water coming from traditional plants with two or three phases and/or of wash water for the olives and/or the water used to fluidize the olive paste (of any kind of olive) during the processing, including following stages:
■ physical pretreatments of the vegetable water to remove residual olive oil;
■ administration of additives and/or flocculants to the physically pretreated vegetable water, to facilitate the separation of the solid phase from the liquid one, and with subsequent sedimentation of the solid phase, preferably performed by a horizontal axis centrifuge, in order to further separate residual water from the solid phase composed mainly of sludge;
■ separation and clarification by a centrifuge, preferably with vertical axis, of the liquid phase from solid coarse residues (sludge);
■ filtration of the liquid phase, preferably through a precoat, to remove the smallest solid particles;
■ ultrafiltration of the liquid phase through an adopted membrane separating molecules with highest molecular weight from the water, eventually recycled at the flocculation stage;
■ nanofiltration of the permeate, ultrafiltered water, separating through an adopted membrane a permeate composed mainly of extremely clarified water with a low BOD content from a concentrate containing mainly a concentrated solution of valuable chemical substances;
■ biological oxidation with active sludge of the nanofiltered water and subsequent separation from the sludge obtaining purified water.

2. Integrated process for the treatment and the recover of the vegetable water coming from the dehumidification of the pomace deriving from the oil mills with two phases in order to obtain drier pomace, comprising mainly the dehumidification of the humid pomace, performed in an equipment that uses centrifugal force operating preferably at temperatures between 20 and 100°C until obtaining a dehumidified pomace with preferably between 40 and 55 % of residual humidity, and the drying of the dehumidified pomace, operating preferably at temperatures between 80 and 250°C until obtaining a dry pomace with a residual humidity preferably inferior of 7% **characterized by** the fact that it comprises the following stages:
■ Physical pretreatments of the vegetable water to remove residual olive oil;
■ Administration of additives and/or flocculants to the physically pretreated vegetable water, to facilitate the separation of the solid phase from the liquid one, and with subsequent sedimentation of the solid phase, preferably performed by a horizontal axis centrifuge, in order to further separate residual water from the solid phase composed mainly of sludge;
■ Separation and clarification by a centrifuge, preferably with vertical axis, of the liquid phase from solid coarse residues (sludge);
■ Filtration of the liquid phase, preferably through a precoat to remove the smallest solid particles;
■ Ultrafiltration of the liquid phase through an adopted membrane separating molecules with higher molecular weight from the water, eventually recycled at the flocculation stage;
■ Nanofiltration of the permeate, ultrafiltered water, separating through an adopted membrane a permeate composed mainly of extremely clarified water with a low BOD content from a concentrate containing mainly a concentrated solution of valuable chemical substances;
■ Biological oxidation with active sludge of the nanofiltered water and subsequent separation from the sludge obtaining purified water.

3. Process as in claim 2 in which the dry pomace is subjected to an extraction with appropriate solvent; preferably hexane, in order to recover residual oil present.

4. Process as in claim 2 in which the dry pomace is directly used as fuel.

5. Process as in claim 2 where the apparatus used for the dehumidification of the humid pomace is a horizontal axis centrifuge (decanter) with an extractive screw for the solids operating with centrifugal force between 1500 and 3000 rounds.

6. Process as in claim 1 or 2 where the physical pretreatments of the vegetable water comprises the subjection of the water to separation by sedimentation, preferably in a flottation basin, separating the main part of water from the heavy phase that contains olive oil residues, performing a further separation step on the heavy phase, preferably with a horizontal axis centrifuge, separating thus olive oil that has to be rectified from water still present.

7. Process as in claim 1 or 2 where the flocculant added to the aqueous phase is at polyacrylamide base, preferably in quantities between 10 and 100 ppm.

8. Process as in claim 1 o 2 where the additive added to the aqueous flocculant phase is polyaluminium chloride, preferably in quantities between 0,05 and 0,25 Kg.

9. Process as in claim 2 in which the sludge separated in the sedimentation stage, those separated by a vertical centrifuge in the clarification and the sludge separated in the biological oxidation are gathered and sent to a drying unit after having been mixed with the dehumidified pomace itself, thus eliminating the waste to be stored and disposed.

## Patentansprüche

1. Verfahren zur Behandlung und Rückgewinnung von Abwasser aus der Olivenölproduktion aus traditionellen Anlagen mit zwei oder drei Phasen und/oder von Waschwasser von Oliven und/oder von Wasser zum Verflüssigen der Olivenpaste (für jede Olivenart) während der Verarbeitung, einschließlich der folgenden Stadien:
■ physische Vorbehandlung des Abwassers um restliches Olivenöl zu entfernen;
■ Hinzufügen von Additiven und/oder Flockungsmitteln in das physisch vorbehandelte Abwasser, um das Trennen der Festphase von der Flüssigphase zu erleichtern, und nachfolgende Sedimentation der Festphase, vorzugsweise anhand einer horizontalen Achsenzentrifuge, um weiteres Restwasser von der Festphase, die hauptsächlich aus Schlamm besteht, zu trennen;
■ Trennung und Klärung anhand einer Zentrifuge, vorzugsweise mit Vertikalachse, der Flüssigphase von groben Feststoffen (Schlamm);
■ Filterung der Flüssigphase, vorzugweise anhand eines precoat, um die kleinsten festen Partikel zu entfernen;
■ Ultrafiltration der Flüssigphase anhand einer geeigneten Membrane, wobei Moleküle mit hohem Molekulargewicht vom Wasser getrennt und eventuell im Flockungsstadium recycelt werden;
■ Nanofiltration des Permeat, ultragefiltertes Wasser, anhand einer geeigneten Membran, wobei zum einen ein Permeat, das sich hauptsächlich aus extrem geklärtem Wasser mit einem niedrigen BOD-Gehalt zusammensetzt, und zum anderen ein Konzentrat mit einer konzentrierten Lösung von wertvollen chemischen Substanzen als Hauptbestandteil, getrennt werden;
■ Biologische Oxidation mit aktivem Schlamm des nanogefilterten Wassers und nachfolgende Trennung vom Schlamm, wobei man gereinigtes Wasser enthält.

2. Integriertes Verfahren zur Behandlung und Rückgewinnung von Olivenölabwasser aus der Entfeuchtung des Tresters aus Zweiphasen-Ölmühlen, um trockneren Trester zu erhalten, in dem der feuchte Trester anhand Zentrifugalkraft einer Entfeuchtung unterzogen wird, wobei vorzugsweise Temperaturen zwischen 20 und 100°C angewandt werden, mit dem Ziel, einen Trester mit einer Restfeuchtigkeit zwischen 40 und 55% zu erhalten und der Trocknung des entfeuchteten Tresters, vorzugsweise bei Temperaturen zwischen 80 und 250°C, bis man einen getrockneten Trester mit einer Restfeuchtigkeit vorzugsweise niedriger als 7 % enthält,
charakterisiert durch das Anwenden der folgenden Stadien:
■ physische Vorbehandlung des Abwassers um restliches Olivenöl zu entfernen;
■ Hinzufügen von Additiven und/oder Flockungsmitteln in das physisch vorbehandelte Abwasser, um das Trennen der Festphase von der Flüssigphase zu erleichtern, und nachfolgende Sedimentation der Festphase, vorzugsweise anhand einer horizontalen Achsenzentrifuge, um weiteres Restwasser von der Festphase, die hauptsächlich aus Schlamm besteht, zu trennen;
■ Trennung und Klärung anhand einer Zentrifuge, vorzugsweise mit Vertikalachse, der Flüssigphase von groben Feststoffen (Schlamm);
■ Filterung der Flüssigphase, vorzugweise anhand eines precoat, um die kleinsten Partikel zu entfernen;
■ Ultrafiltration der Flüssigphase anhand einer geeigneten Membrane, wobei Moleküle mit hohem Molekulargewicht vom Wasser getrennt und eventuell im Flockungsstadium recycelt werden;
■ Nanofiltration des Permeat, ultragefiltertes Wasser, anhand einer geeigneten Membran, wobei zum einen ein Permeat, das sich hauptsächlich aus extrem geklärtem Wasser mit einem niedrigen BOD-Gehalt zusammensetzt, und zum anderen ein Konzentrat mit einer konzentrierten Lösung von wertvollen chemischen Substanzen als Hauptbestandteil, getrennt werden;
■ Biologische Oxidation mit aktivem Schlamm des nanogefilterten Wassers und nachfolgende Trennung vom Schlamm, wobei man gereinigtes Wasser enthält.

3. Verfahren nach Anspruch 2, **dadurch gekennzeichnet, dass** der getrocknete Trester einer Extraktion mit geeignetem Lösungsmittel, vorzugsweise Hexan, unterzogen wird, um das vorhandene Restöl zurück zu gewinnen.

4. Verfahren nach Anspruch 2, **dadurch gekennzeichnet, dass** der getrocknete Trester direkt als Brennstoff verwendet werden kann.

5. Verfahren nach Anspruch 2, **dadurch gekennzeichnet, dass** der Entfeuchtungsapparat eine Horizontalachsenzentrifuge (Dekanter) mit Förderschnecke für Feststoffe ist, die mit einer Zentrifugalkraft zwischen 1500 und 3000 Umdrehungen arbeitet.

6. Verfahren nach Anspruch 1 oder 2, **dadurch gekennzeichnet, dass** die physischen Vorbehandlungen des Olivenölabwassers das Trennen des Wassers anhand Sedimentation einschließen, vorzugsweise in einem Flotationsbecken, in dem man den größten Teil des Wassers von der schweren Phase trennt, welche einen Rest an Olivenöl enthält, und dass die schwere Phase einer weiteren Trennung unterzogen wird, vorzugsweise in einer Zentrifuge mit Horizontalachse, wobei das zu verfeinernde Olivenöl vom Wasser getrennt wird.

7. Verfahren nach Anspruch 1 oder 2, **dadurch gekennzeichnet dass** das zur Flüssigphase hinzugefügte Flockungsmittel auf polyacrylamidischer Basis ist, vorzugsweise in einer Menge zwischen 10 und 100 ppm.

8. Verfahren nach Anspruch 1 oder 2, **dadurch gekennzeichnet, dass** das hinzugefügte Additiv in die flüssige Flockungsphase Aluminium Polychlorid PAC ist, vorzugsweise in einer Menge zwischen 0,05 und 0,25 kg..

9. Verfahren nach Anspruch 2, **dadurch gekennzeichnet, dass** der getrennte Schlamm aus dem Stadium der Sedimentation, derjenige aus der Vertikalzentrifuge in der Klärung und der Schlamm aus dem Stadium der biologischen Oxidation gesammelt und in die Trocknungseinheit geleitet wird, nachdem er vorher mit dem entfeuchteten Trester gemischt wurde, wodurch die zu lagernden und zu entsorgenden Abfallprodukte eliminiert werden.

## Revendications

1. Procédé pour le traitement et la récupération des eaux de végétation provenant d'installations traditionnelles à deux ou trois phases et/ou des eaux de lavage des olives et/ou des eaux utilisées pour fluidifier la pâte d'olives (de tous les types d'olives) pendant le traitement, y compris les opérations suivantes:
■ prétraitements physiques des eaux de végétation pour éliminer l'huile d'olive résiduelle;
■ administration d'adjuvants et/ou de floculants dans les eaux de végétation physiquement prétraitées, pour faciliter la séparation de la phase solide et de la phase liquide, puis la sédimentation de la phase solide, effectuée de préférence avec une centrifugeuse à axe horizontal, afin de compléter la séparation de l'eau résiduelle de la phase solide se constituant essentiellement de boues;
■ séparation et clarification au moyen d'une centrifugeuse, de préférence à axe vertical, d'une phase liquide des résidus solides grossiers (boues);
■ filtrage de la phase liquide, de préférence au moyen d'une couche préliminaire, afin d'éliminer les particules solides les plus petites;
■ ultrafiltration de la phase liquide à travers une membrane prévue à cet effet et séparant de l'eau les molécules ayant poids moléculaire le plus élevé, éventuellement recyclées au stade de floculation;
■ nanofiltration du perméat, eau ultrafiltrée, en séparant, à travers une membrane appropriée un perméat se constituant essentiellement d'eau extrêmement purifiée, à basse teneur en BOD, du concentré se constituant essentiellement d'une solution de substances chimiques prisées;
■ oxydation biologique à boues actives de l'eau nanofiltrée, puis séparation ultérieure des boues afin d'obtenir de l'eau purifiée.

2. Procédé intégré pour le traitement et la récupération des eaux de végétation provenant de la déshumidification du marc humide produit par des pressoirs à huile à deux phases, de façon à obtenir un marc plus sec, comportant essentiellement la déshumidification du marc humide, effectuée à l'aide d'un instrument recourant à la force centrifuge, en opérant de préférence à une température comprise entre 20 et 100 °C, jusqu'à obtention d'un marc déshumidifié de préférence à une humidité résiduelle comprise entre 40 et 55 %, et au séchage du marc déshumidifié, en opérant de préférence à une température comprise entre 80 et 250°C, jusqu'à obtention d'un marc sec présentant une humidité résiduelle si possible inférieure à 7 %,
se **caractérisé par le fait qu'**il présente les stades suivants:
■ Prétraitements physiques des eaux de végétation pour éliminer l'huile d'olive résiduelle;
■ Administration d'adjuvants et/ou de floculants dans les eaux de végétation physiquement prétraitées, pour faciliter la séparation de la phase solide et de la phase liquide, puis la sédimentation de la phase solide, effectuée de préférence avec une centrifugeuse à axe horizontal, afin de compléter la séparation de l'eau résiduelle de la phase solide constituée essentiellement de boues;
■ Séparation et clarification au moyen d'une centrifugeuse, de préférence à axe vertical, d'une phase liquide des résidus solides grossiers (boues);
■ Filtrage de la phase liquide, de préférence au moyen d'une couche préliminaire, afin d'éliminer les particules solides les plus petites ;
■ Ultrafiltration de la phase liquide à travers une membrane prévue à cet effet et séparant de l'eau les molécules ayant le poids moléculaire le plus élevé, éventuellement recyclées au stade de floculation;
■ Nanofiltration du perméat, eau ultrafiltrée, en séparant à travers une membrane appropriée un perméat se constituant essentiellement d'eau extrêmement purifiée, à basse teneur en BOD, du concentré se constituant essentiellement d'une solution de substances chimiques prisées;
■ Oxydation biologique à boues actives de l'eau nanofiltrée, puis séparation ultérieure des boues afin d'obtenir de l'eau purifiée.

3. Procédé selon la revendication 2, dans lequel le marc sec est soumis à une extraction avec un solvant approprié, de l'hexane de préférence, afin de récupérer l'huile résiduelle présente.

4. Procédé selon la revendication 2, dans lequel le marc sec est utilisé directement en tant que combustible.

5. Procédé selon la revendication 2, dans lequel l'appareil utilisé pour la déshumidification du marc humide est une centrifugeuse à axe horizontal (décanteuse) munie d'une vis d'extraction des solides, opérant avec une force centrifuge comprise entre 1 500 et 3 000 tours.

6. Procédé selon la revendication 1 ou 2, dans lequel les prétraitements physiques des eaux de végétation comprennent la soumission de l'eau à une séparation par sédimentation, de préférence dans un bac de flottaison, en séparant la plus grande partie de l'eau de la phase lourde qui contient les résidus d'huile d'olive, en soumettant la phase lourde à une séparation ultérieure, de préférence avec une centrifugeuse à axe horizontal, en séparant ainsi l'huile d'olive devant etre rectifiée de l'eau encore présente.

7. Procédé selon la revendication 1 ou 2, dans lequel le floculant ajouté à la phase aqueuse est à base de polyacrylamide, si possible dans une quantité comprise entre 10 et 100 ppm.

8. Procédé selon la revendication 1 ou 2, dans lequel l'adjuvant ajouté à la phase floculante aqueuse est du polychlorure d'aluminium, si possible dans une quantité comprise entre 0,05 et 0,25 Kg.

9. Procédé selon la revendication 2, dans lequel les boues séparées lors du stade de la sédimentation, celles qui sont séparées par la centrifugeuse verticale dans la clarification et les boues séparées lors de l'oxydation sont convoyées et envoyées à l'unité de séchage, après avoir été mélangées au marc déshumidifié, de façon à éliminer les déchets à stocker ou à mettre au rebut.
